# DEMANDE DE BREVET EUROPEEN

(11) **EP 4 730 812 A1**
(43) Date de publication de la demande: **22.04.2026**
(21) Numéro de dépôt: 25206930.7
(22) Date de dépôt: 06.10.2025
(51) Int. Cl.: H04N 21/2187, H04N 21/262, H04N 21/472, H04N 21/845

(54) **PROCÉDÉ DE GESTION DE L ACCÈS À UN CONTENU EN COURS DE DIFFUSION**

(30) Priorité: 15.10.2024 FR 2411144
(71) Demandeur: Orange, 92130 Issy-les-Moulineaux (FR)
(72) Inventeur: GASTE, Olivier, 92326 Chatillon (FR); MARCHAND, Hervé, 92326 Chatillon (FR)

(57) **Abrégé**

L'invention se rapporte à un procédé de gestion de l'accès à un contenu (C2) en cours de diffusion sous forme de segments de contenu transmis successivement, caractérisé en ce qu'une demande d'accès (REQ(C2);REQ(C2,MNFI)) aux segments de contenu diffusés en temps réel est suivie d'une obtention de segments du contenu en différé..

## Description

### Domaine technique

Le domaine de l'invention est celui de la gestion de l'accès par un dispositif de lecture à un contenu diffusé en temps réel.

Le dispositif de lecture vise tous les dispositifs de traitement de données équipés de processeurs capables de recevoir et de lire ou relire un contenu diffusé depuis un serveur de contenus.

Un tel dispositif de lecture est par exemple un décodeur de télévision numérique.

Le contenu visé ici est un contenu multimédia. Ce contenu est par exemple un contenu télévisé. Ce contenu peut être diffusé en temps réel ou être enregistré et diffusé en différé. Le contenu peut aussi être provenant par exemple d'une chaîne de télévision peut concerner une scène filmée en direct *par exemple au moyen d'une caméra, le contenu est capté en direct dans ce cas ; cela concerne des événements sportifs par exemple comme un match de tennis, de football, etc. ; le contenu peut aussi être issu d'une scène enregistrée.

### Etat de la technique

Lors d'un accès à un contenu multimédia, tel qu'un film ou un événement filmé (ex : jeux olympiques, match de football, etc.), un dispositif de lecture émet une requête à destination d'un serveur de contenus en indiquant un contenu multimédia (vidéo et/ou audio) choisi. Le dispositif de lecture reçoit en retour un flux de données numériques relatif à ce contenu.

Les données reçues sont ensuite décodées par le dispositif de lecture, puis restituées sous la forme d'un affichage du contenu multimédia correspondant.

Le serveur de contenus peut transmettre un contenu de plusieurs manières à savoir en mode multicast (par exemple IPTV sigle anglosaxon de « Internet Protocol TeleVision »), en mode unicast, etc. Après réception du contenu, le dispositif de lecture décode le contenu et requiert une restitution sur un dispositif de restitution.

Une diffusion d'un contenu vidéo en HTTP Adaptive Streaming (HAS) permet de diffuser une vidéo en mode OTT (sigle anglosaxon de « Over The Top ») en proposant la meilleure qualité possible à l'utilisateur en fonction de la bande passante disponible sur le réseau. Cette diffusion s'appuie sur un échange d'un fichier de description (aussi appelé « fichier manifest » ou tout simplement « manifest » par l'homme du métier) entre un serveur de diffusion de contenu HAS et un dispositif de lecture client. Ce fichier de description décrit en général (sous forme d'URLs) les derniers segments vidéo qui ont été produits. Ces segments ont généralement tous une durée identique (par exemple deux secondes).

Lorsqu'un utilisateur accède à un contenu, les segments reçus sont les derniers segments produits sur le serveur de contenu ; ces derniers segments correspondent au flux Live.

Le contenu en question peut avoir débuté depuis un certain temps ; l'expérience utilisateur n'est pas optimale lorsque celui souhaite accéder à un instant de diffusion antérieur par exemple au début du contenu.

Outre la lecture de contenus, certains dispositifs de lecture offrent une fonction appelée « Start Over » par l'homme du métier (ou « rattrapage » ou « lire depuis le début ») qui permet à un utilisateur, par exemple lorsqu'il regarde un contenu diffusé en temps réel (chaîne diffusée en « Live »), de relire en différé une partie du contenu qui a été diffusé en Live ; cette fonction permet notamment de relire un contenu depuis un instant souhaité, par exemple depuis son début. Par exemple, si un film diffusé en temps réel débute à 21h00 et que l'utilisateur accède au flux Live correspondant en zappant sur la chaine à 21h40, l'utilisateur peut demander, en sélectionnant une commande liée à la fonction dite de rattrapage, à ce que la lecture du contenu reprenne par exemple depuis un instant souhaité par exemple 21h15, voire depuis le début du film à savoir 21h. Dans ce cas, on passe d'un mode de lecture en temps réel à un mode de lecture en différée.

Un retour au début du contenu nécessite donc de recevoir un contenu Live, et d'exécuter une commande de « startover » afin de revenir à un instant antérieur par exemple au début du contenu.

L'expérience utilisateur n'est pas là non plus optimale en particulier lorsque le retour en arrière entraîne à une restitution d'images pouvant spoiler certaines partie du contenu.

L'invention vient améliorer la situation.

### L'invention

A cet effet, selon un premier aspect fonctionnel, l'invention se rapporte à un procédé de gestion de l'accès à un contenu en cours de diffusion sous forme de segments de contenu transmis successivement, caractérisé en ce qu'une demande d'accès aux segments de contenu diffusés en temps réel est suivie d'une obtention de segments du contenu en différé.

Selon l'invention, contrairement à l'état de la technique dans lequel, suite à une réception d'accès au contenu Live, les segments lus ne sont pas les derniers segments demandés mais des segments produits antérieurement par exemple pour donner la possibilité de lire le contenu depuis son début. L'accès au contenu depuis son début requiert donc une simple demande d'accès au contenu diffusé en temps réel. En d'autres mots, une demande d'accès aux segments de contenu diffusés en temps réel est traitée comme une demande d'accès aux segments en différé.

L'invention trouve un intérêt certain pour des contenus captés en direct comme un événement sportif tel qu'un match de football. Dans l'art antérieur, un utilisateur qui accède à un tel contenu après son début par exemple trente minutes après et souhaitant revenir depuis le début activerait le mode startover ; lors du retour en arrière, des images sont souvent restituées pour illustrer l'état d'avancement du retour en arrière ; dans ce cas, non seulement le retour en arrière requiert du temps mais en plus l'utilisateur voit les images restituées et peut malencontreusement entrevoir des scènes du match ; ce retour en arrière dans le contenu peut avoir pour effet de dévoiler un événement tel qu'un but.

Grâce à l'invention, le retour depuis le début est quasi instantané, seule une transformation de requête est opérée sans intervention de l'utilisateur ; de plus, un utilisateur est garanti que lorsque le contenu est lu et qu'un retour en arrière est exécuté, par exemple la lecture depuis son début, qu'aucune image ne soit restituée pour ne pas spoiler la partie de contenu concernée, ce en un minimum de temps.

A noter que l'invention est mise en œuvre indifféremment lors d'un accès initial à une chaîne ou après avoir zappé vers une chaîne.

A noter qu'un contenu en cours de diffusion sous forme de segments vise une diffusion de segments successivement ou une diffusion de groupe de segments successivement.

Précisons ici que l'invention ne se limite pas à un retour dans le contenu depuis le début ; un retour dans le contenu peut concerner un retour à un instant antérieur quelconque situé entre l'instant de début du contenu et l'instant courant de diffusion.

Selon un mode de mise en œuvre particulier de l'invention, le contenu en cours de diffusion ayant un instant de début, la lecture en différée s'effectue depuis l'instant de début. Ce mode permet, comme évoqué ci-dessus, un retour dans le contenu et donc une lecture en différé du contenu sans demande explicite de l'utilisateur.

Selon un autre mode qui pourra être mis en œuvre alternativement ou cumulativement avec le précédent, un contenu étant associé à un type, le procédé est exécuté pour un type de contenu diffusé. Ce mode permet de ne pas mettre en œuvre le traitement pour tous les contenus ; en effet, tous les contenus ne nécessitent pas d'être lu depuis le début ; ce mode permet de mettre en œuvre le procédé que pour certains contenus notamment les contenus issus d'une captation en direct communément appelés programme en direct voire programme en direct Live. Ce mode évite un affichage inutile sur l'écran, alors que l'utilisateur n'a pas demandé ou que l'utilisateur n'a pas l'intention de demander un retour en arrière dans le contenu, d'une interface (de type popup) affichant des onglets à sélectionner requérant une sélection entre un accès au contenu diffusé en Live ou un retour depuis le début.

En d'autres mots, pour un contenu capté par une caméra en direct (communément appelé « contenu Live »), comme un match de football ou un journal télévisé, un retour en arrière progressif est désactivé automatiquement ; à l'inverse, pour un contenu de type film , série, documentaire, plus généralement un contenu non capté en direct, un retour en arrière progressif est possible ; dans ce cas, l'utilisateur peut demander un retour progressif avec une vitesse de retour choisie (x4,x16, x64, etc.).

Ce mode de réalisation automatise un retour depuis le début lorsqu'un retour en arrière est demandé pour un type de contenu en particulier. Ce mode évite d'interroger l'utilisateur via une interface/popup sur sa volonté ou pas de réaliser un retour en arrière.

Selon un autre mode qui pourra être mis en œuvre alternativement ou cumulativement avec les précédents, le type de contenu est un contenu dont les segments sont issus d'une captation en direct. Comme indiqué ci-dessus, un contenu diffusé comme un événement sportif qui fait l'objet d'un retour en arrière peut être spoiler ; ce mode permet de relire un contenu depuis son début sans spoiler le contenu.

Selon un autre mode qui pourra être mis en œuvre alternativement ou cumulativement avec les précédents, le procédé comprend une restitution d'une donnée informant que le contenu est lu en différé. Le traitement s'effectuant à l'insu de l'utilisateur, ce mode permet d'être averti qu'il y a un décalage avec le flux diffusé en temps réel.

Selon un premier aspect matériel, l'invention se rapporte à une entité de gestion, dite première entité dans la suite, de l'accès à un contenu en cours de diffusion sous forme de segments de contenu transmis successivement, caractérisé en ce qu'elle comprend un module de traitement apte à, suite à une demande d'accès aux segments de contenu diffusés en temps réel, obtenir des segments du contenu en différé.

Selon un autre aspect matériel, l'invention se rapporte à un dispositif de lecture comprenant une entité de gestion telle que définie ci-dessus.

Selon un autre aspect matériel, l'invention a pour objet un programme d'ordinateur apte à être mis en œuvre sur une entité de gestion telle que définie ci-dessus, le programme comprenant des instructions de code qui, lorsqu'il est exécuté par un processeur, réalise les étapes du procédé de gestion définies ci-dessus.

Selon un autre aspect matériel, l'invention a pour objet un support de données sur lequel a été mémorisée au moins une série d'instructions de code de programme pour l'exécution d'un procédé de gestion tel que défini ci-dessus.

Selon un deuxième aspect fonctionnel, l'invention se rapporte à un procédé de gestion de la transmission d'un contenu au cours de sa diffusion sous forme de segments transmis successivement, caractérisé en ce qu'une réception d'une demande d'accès aux segments de contenu diffusés en temps réel est suivie d'une transmission des segments du contenu en différé.

Selon un mode de réalisation lié à ce deuxième aspect fonctionnel, un contenu étant associé à un type, le procédé est exécuté pour un type de contenu diffusé.

Selon un autre mode lié à ce deuxième aspect fonctionnel, qui pourra être mis en œuvre alternativement ou cumulativement avec le précédent, le type de contenu est un contenu dont les segments sont issus d'une captation en direct.

Selon un autre mode lié à ce deuxième aspect fonctionnel, qui pourra être mis en œuvre alternativement ou cumulativement avec les précédents, le procédé comprend une transmission d'une demande de restitution d'une donnée informant que le contenu est lu en différé.

L'invention se rapporte également à une deuxième entité de gestion de l'accès à un contenu en cours de diffusion sous forme de segments de contenu transmis successivement, caractérisé en ce qu'elle comprend un module de traitement apte à, suite à la réception d'une demande d'accès aux segments de contenu diffusés en temps réel, transmettre des segments du contenu en différé

L'invention se rapporte aussi à un serveur comprenant la deuxième entité de gestion définie ci-dessus.

L'invention se rapporte aussi à un programme d'ordinateur apte à être mis en œuvre sur la deuxième entité de gestion telle que définie ci-dessus, le programme comprenant des instructions de code qui, lorsqu'il est exécuté par un processeur, réalise les étapes du procédé définies en référence au deuxième aspect fonctionnel défini ci-dessus.

L'invention se rapporte aussi à un support de données sur lequel a été mémorisée au moins une série d'instructions de code de programme pour l'exécution d'un procédé de gestion en référence au deuxième aspect fonctionnel.

Le support visé ci-dessus peut être n'importe quelle entité ou dispositif capable de stocker le programme. Par exemple, un support peut comporter un moyen de stockage, tel qu'une mémoire de type ROM (sigle de Read Only Memory), par exemple un CD ROM ou une ROM de circuit microélectronique, ou encore un moyen d'enregistrement magnétique, par exemple un disque dur. D'autre part, un support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
[Fig 1] représente un système informatique dans lequel l'invention peut être mise en œuvre.
[Fig 2] illustre de façon schématique la structure matérielle d'un serveur apte à transmettre des fichiers de description ;
[Fig 3] illustre de façon schématique la structure matérielle d'un dispositif de lecture apte à lire des flux multimédias ;
[Fig 4] illustre un mode de réalisation du procédé de l'invention. Cette figure est un grossissement d'une partie de la figure 1 illustrant la gestion du stockage des contenus dans la mémoire du serveur au fil de leurs diffusions respectives ; l'entité gère le stockage des contenus suite à leurs diffusions afin de permettre une lecture en différée du contenu.
[Fig 5] illustre un échange de message entre le dispositif de lecture et le serveur lors de l'accès à un contenu selon un premier mode de réalisation non limitatif.
[Fig 6] illustre un échange de message entre le dispositif de lecture et le serveur lors de l'accès à un contenu selon un deuxième mode de réalisation non limitatif.
[Fig 7] illustre un échange de message entre le dispositif de lecture et le serveur lors de l'accès à un contenu selon un troisième mode de réalisation non limitatif.

### Description détaillée de modes de réalisation de l'invention

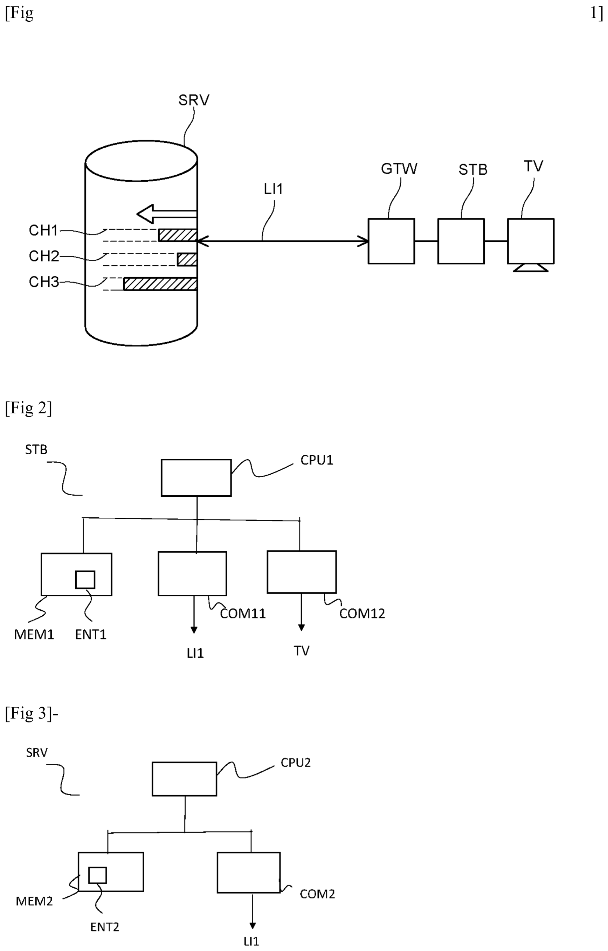

La figure 1 représente un système informatique SYS dans lequel est mis en œuvre un réseau de diffusion de contenus de type CDN (Content Distribution Network) depuis lequel sont transmis des contenus à destination de dispositifs clients ou dispositifs de lecture de contenus et des fichiers de description associés aux contenus multimédias. Le serveur de diffusion de contenus, appelé dans le présent texte serveur de contenus, diffuse sur plusieurs canaux de diffusion associés à des chaînes de télévision.

Dans notre exemple, à des fins de simplification de l'exposé, le système SYS comprend un seul dispositif de lecture STB. Cependant l'invention s'applique à un nombre quelconque de dispositifs de lecture, le principe de l'invention pouvant être mis en œuvre sur tout ou partie des dispositifs de lecture STB.

Le dispositif de lecture est par exemple un dispositif de lecture numérique tel qu'un décodeur.

Le contenu multimédia visé ici est un contenu vidéo d'une chaîne de télévision. Ce contenu est diffusé depuis un serveur qui diffuse des programmes télévisés dits Live, c'est-à-dire diffusés en temps réel ; en d'autres mots, des images issues d'une caméra sont encodées en segments qui sont mis à disposition dès qu'ils sont produits. Un accès aux derniers segments signifie que le dispositif de lecture STB accède aux contenus diffusés en temps réel ; à l'inverse, un accès à des contenus autres que les derniers segments signifie que l'accès aux segments s'effectue en différé.

Parmi les contenus diffusés, on trouve des contenus diffusés en direct en temps réel. Ce type concerne souvent des événements sportifs tels que les jeux olympiques. On verra dans suite que l'invention s'applique particulièrement bien à ce type de contenus.

Dans notre exemple, le dispositif de lecture STB est connecté à un terminal de restitution TV tel qu'une télévision. Le dispositif peut transmettre des données à restituer au dispositif de restitution TV.

Dans notre exemple, le dispositif de lecture STB est connecté sur un port du dispositif de restitution TV ; le dispositif de lecture STB et le dispositif de restitution TV pourrait aussi former un seul et unique dispositif.

Dans notre exemple, le dispositif de lecture STB est situé dans un réseau local LAN (sigle anglosaxon de « Local Area Network ») géré par une passerelle domestique GTW.

La passerelle GTW est apte à communiquer via une liaison de communication LI1 qui peut être un réseau de télécommunication tel qu'un réseau étendu WAN connu de l'homme du métier.

Dans notre exemple, le système informatique SYS met en œuvre un réseau de diffusion de contenus appelé CDN (Content Distribution Network) par l'homme du métier depuis lequel des contenus sont transmis à destination de dispositifs de lecture de contenus STB.

Le réseau CDN est constitué de serveurs reliés en réseau dans le réseau étendu ; ces serveurs coopèrent afin de mettre des contenus multimédias à disposition des utilisateurs. Afin de simplifier l'exposé de l'invention, un seul serveur de contenus SRV sera représenté sur la figure 1 pour représenter le CDN. Le serveur de contenus SRV se trouve, dans notre exemple, dans le réseau étendu WAN.

Le serveur de contenus SRV reçoit par exemple des contenus depuis des chaînes de télévision numérique en provenance d'un réseau de télévision diffusée (non représenté), et les met à disposition en temps réel à des terminaux clients, ici le dispositif de lecture STB, via des canaux de diffusion. Les contenus peuvent être des contenus enregistrés ou capter en direct par des caméras.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le dispositif de lecture STB peut transmettre un contenu à restituer au dispositif de restitution TV via un module de communication COM12. Ce module COM12 est par exemple une liaison HDMI.

Le dispositif de lecture STB communique avec la passerelle via un module Ethernet pour une communication locale avec fils ou via un module radio de type Wi-Fi pour une communication locale sans fils avec la passerelle résidentielle GTW. Le module en question est référencé COM11 sur la figure 2.

Dans notre exemple, le dispositif de lecture STB comprend un module de téléchargement en mode streaming HAS (http Adaptative Streaming), non représenté, apte à gérer le téléchargement de segments du contenu lorsque le contenu est transmis sur le réseau LI1 sous forme de segments conformément à la technique dite de streaming adaptatif connu de l'homme du métier.

Rappelons brièvement ici que lorsqu'un utilisateur accède à un flux Live diffusé en http Adaptative Streaming (HAS), le dispositif de lecture STB reçoit à intervalle régulier, en général toutes les deux secondes, des fichiers de description successivement, appelés ci-après fichiers de description temps réels, qui décrivent chacun généralement les soixante dernières secondes du flux (30 segments de 2 secondes) en fournissant des adresses de type URLs de segments correspondant à ces soixante dernières secondes. Grâce aux adresses de segments reçues, le dispositif de lecture STB peut télécharger les segments et les lire les uns après les autres.

En référence à la figure 3, le serveur SRV est également équipé d'au moins un processeur CPU2 et de mémoires MEM2 pour la réalisation de traitement informatique.

Le serveur SRV communique avec la passerelle GTW via réseau WAN. Le serveur comprend, un module de communication référencé COM2 pour la communication avec le réseau WAN.

Il arrive parfois de manquer le début d'un programme télévisé (film, série, etc.) diffusé en temps réel, ou de souhaiter relire un contenu depuis un instant donné. Une fonction appelée « lire du début » ou « rattrapage » (appelée également « Start Over » ou « Restart » par l'homme du métier) permet de reprendre, à tout moment, le programme en cours de diffusion à un instant antérieur à l'instant courant ; par exemple, la lecture du contenu peut être reprise depuis son commencement, ou depuis un instant choisi par un utilisateur. Par exemple, si un film débute à 21h00 et si l'utilisateur zappe sur la chaine à 21h40, il peut demander à ce que la lecture du contenu reprenne depuis le début du film. Dans ce cas, on passe d'un mode de lecture à un contenu en temps réel à un mode de lecture en différée.

Pour accéder à un contenu en lecture différée, le serveur SRV mémorise les parties de contenu ayant été diffusées. Dans notre exemple, comme indiqué ci-dessus, les parties sont des segments de contenu. Les segments ayant été diffusés sont enregistrés en mémoire MEM2 juste après leurs diffusions respectives.

Ces parties de contenu sont mémorisés pendant une certaine durée. Des fichiers de description sont créés en conséquence et incluent non seulement les adresses des derniers segments produits mais aussi les adresses des segments mémorisés ; ces fichiers sont ensuite mis à dispositif du dispositif de lecture STB pour pouvoir accéder aux segments en les téléchargeant grâce aux adresses URL incluses dans ces fichiers.

A noter, dans notre exemple, que les segments ayant été diffusés sont stockés sur une plage temporelle précédant l'instant courant de diffusion de diffusion.

Selon un mode de réalisation, des plages temporelles PLn sont associées à différents canaux de diffusion CHn en faisant varier les plages temporelles dans le temps. Dans notre exemple, l'entité va gérer les plages temporelles de manière à ne mémoriser que les contenus en cours de diffusion respectivement sur les différents canaux de diffusion. Des fichiers de description sont créés en conséquence.

En définitive, dans notre exemple de réalisation, les plages temporelles peuvent différer d'un canal à un autre. L'invention ne se limite pas à ce cas d'usage, les plages temporelles pourraient être identiques pour tous les canaux de diffusion et indépendant de l'instant de début du contenu considéré sur un canal donné.

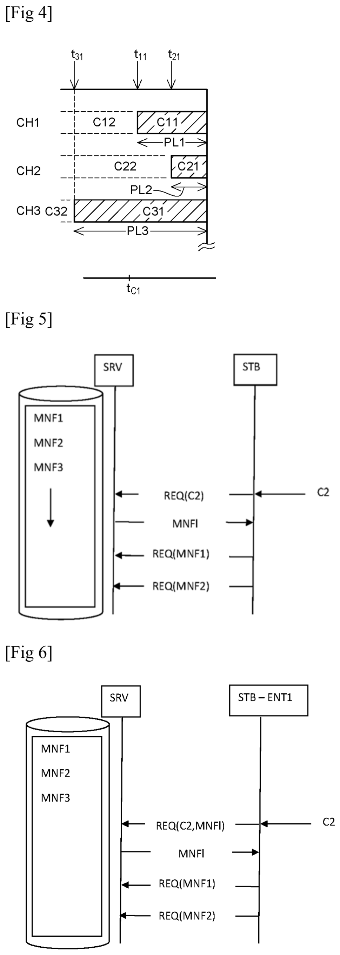

La figure 4 illustre schématiquement au niveau du serveur SRV une liste de contenus issus de canaux de diffusion de chaînes de télévision respectives CH1-CH3.

Des plages temporelles PLn (n correspond à un canal CHn, n est un entier) sont aussi représentées en liaison avec chaque canal de diffusion. Les plages temporelles précèdent l'instant courant tc de diffusion d'une certaine durée. Comme expliqué ci-dessus, cette plage est gérée de telle sorte que la durée choisie est telle que les canaux ne stockent que le contenu en cours de diffusion depuis son début. A noter que cela n'est qu'un mode de réalisation ; d'autres modes peuvent être imaginés dans lesquels la plage temporelle peut être constante et donc indépendante de l'instant de début du contenu en cours de diffusion.

L'accès aux segments s'effectuent grâce à des fichiers de description spécifiques. En effet, une demande d'accès aux segments peut se faire de différentes façons selon que les fichiers de description sont des fichiers de description :
- incluant une description des derniers segments uniquement ; ci-après appelé « fichier court » ;
- ou incluant non seulement les derniers segments mais aussi des segments sur une plage temporelle donnée comme expliqué précédemment, appelé ci-après « fichier long » ; ce type de fichier permet de réaliser un retour en arrière dans le contenu afin de lire en différé le contenu.

La figure 4 comprend un état du stockage des contenus à un premier instant tc.

A cet instant courant donné tc, dit instant courant, les chaînes sont en cours de diffusion en temps réel de contenus C1, C2, C3 respectivement :
Un premier contenu C1 dont la diffusion a démarré à l'instant t1 ;
un deuxième contenu C2 dont la diffusion a démarré à l'instant t2
un troisième contenu C3 dont la diffusion a démarré à l'instant t3.

Supposons maintenant qu'un utilisateur souhaite lire le contenu C2 diffusé en temps réel en direct. Pour cela, dans notre exemple, cet utilisateur sélectionne le deuxième canal CH2.

Une entité de gestion est apte à recevoir une demande d'accès aux segments de contenu multimédia C2 en cours de diffusion et à obtenir suite à la réception de la demande des segments de ce même contenu en différé.

Selon l'invention, une réception d'une demande d'accès au contenu diffusé en temps réel est traitée comme une requête d'accès en différée.

On verra dans la suite dans des modes de réalisation que l'entité de gestion traite une demande d'accès au contenu en temps réel comme une demande d'accès au contenu en différé.

La localisation de l'entité de gestion ENT est indifférente, celle-ci peut se situer sur le dispositif de lecture dispositif de lecture STB, sur le serveur SRV, ou ailleurs dans le réseau. Lorsque la transformation est réalisée dans le dispositif de lecture STB, l'entité est référencée ENT1. Lorsque la transformation est réalisée dans le serveur, l'entité est référencée ENT2. Dans la suite, on suppose que l'entité est installée dans le dispositif de lecture STB.

En d'autres mots, bien qu'ayant reçu une requête d'accès au segments diffusés en temps réel, le dispositif de lecture STB reçoit depuis le serveur SRV des segments plus anciens ; la lecture du contenu s'effectue alors en différée.

On décrit maintenant, en référence à la figure 5, un mode de réalisation dans lequel la requête d'accès est transformée en requête d'accès au contenu depuis le début. L'invention ne se limite bien évidemment pas à ce mode ; l'instant de lecture en différée pouvant être quelconque.

Cette figure 5 comprend des axes associés au serveur SRV et au dispositif de lecture STB.

Dans ce mode, on suppose que l'entité ENT1 est située dans le dispositif de lecture STB. On suppose aussi que le dispositif de lecture STB reçoit périodiquement des fichiers de description longs décrits ci-dessus de manière à lire un contenu en différé.

Les étapes sont les suivantes.

On suppose que des segments de contenus sont produits en temps réel sur le serveur SRV et sont mis à disposition suite à leurs productions respectives.

Suite à la production de segments du contenu C2 par le serveur, des fichiers de description longs MNF1-MNF4 sont créés et transmis successivement sur requêtes issues de dispositifs de lecture. Le premier fichier de description MNF1 produit est le premier fichier de description créé ; ce dernier décrit les premiers segments du contenu concerné correspondants au début du contenu (typiquement le début d'un programme de télévison) ; le deuxième fichier MNF2 décrit les segments suivants, et ainsi de suite.

Lors d'une première étape, l'entité de gestion ENT1 reçoit une demande d'accès au contenu C2 depuis une interface de commande.

Lors d'une étape suivante, le dispositif de lecture STB transmet une requête d'accès au contenu REQ(C2) à destination du serveur SRV.

Ensuite, le dispositif de lecture STB reçoit en retour un fichier de description long décrivant les URLs des segments présents dans la plage PL2 décrite ci-dessus.

Lors d'une étape ultérieure, de manière à obtenir des segments en différé, l'entité de gestion ENT1 transforme la requête d'accès au contenu C2 en requête d'accès en différé ; pour cela, l'entité de gestion ENT1 requiert un accès aux premiers segments du contenu et suivants en utilisant le fichier de description long reçu.

Lors d'une étape ultérieure, le dispositif de lecture STB reçoit les premiers segments et les suivants successivement et les restitue.

Ce mode montre bien qu'une requête d'accès aux segments temps réels est traitée comme une requête d'accès au contenu en différée.

La figure 6 illustre un autre mode de réalisation dans lequel les fichiers de description reçus sont des fichiers courts.

Lors d'une première étape, l'entité de gestion reçoit une demande d'accès au contenu C2 depuis une interface de commande.

Lors d'une étape suivante, le dispositif de lecture STB transmet une requête d'accès au contenu REQ(C2,MNFI) incluant comme paramètre un identifiant du contenu C2 et une demande de réception d'un fichier de description long MNFI de manière à pouvoir lire le contenu en différé.

Lors d'une étape ultérieure, le dispositif de lecture STB reçoit en retour un fichier de description long décrivant les URLs des segments présente st dans la plage PL2 décrite ci-dessus.

Lors d'une étape suivante, l'entité de gestion ENT1 requiert un accès au contenu C2 en différé.

En définitive, la requête initiale reçue par l'entité, requérant un accès au flux diffusé en temps réel est transformé en requête d'accès au contenu C2 en différé.

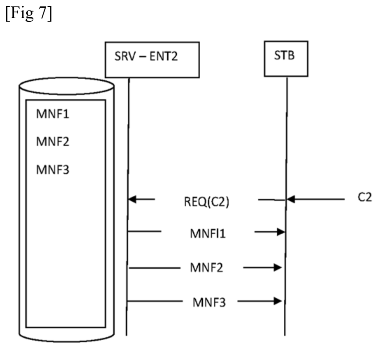

Un autre mode de réalisation est décrit en référence à la figure 7. Dans ce mode, tout comme dans le mode décrit en référence à la figure 5, le dispositif de lecture STB reçoit des fichiers de description courts décrivant les derniers segments de contenu produits.

A la différence du mode de la figure 5, suite à transmission d'une requête d'accès au contenu C2, le serveur SRV reçoit la requête et transmet en retour des fichiers de description successivement créées depuis le début de la diffusion du contenu C2. Le dispositif de lecture STB reçoit alors le premier fichier de description MNF1, le deuxième MNF2 et ainsi de suite. Le dispositif de lecture STB peut lire le contenu en différé.

Dans ce mode, le serveur SRV prend l'initiative de transmettre les fichiers de description nécessaires à une lecture en différé. La transformation s'opère donc dans le serveur SRV. Dans ce mode, le dispositif de lecture STB est donc déchargé d'une partie du traitement lié à la transformation d'une requête d'accès au flux diffusé en temps réel en une requête d'accès au contenu en différé.

Plus généralement, le procédé géré par le deuxième entité ENT2 est caractérisé en ce qu'une qu'une réception d'une demande d'accès (REQ(C2);REQ(C2,MNFI)) aux segments de contenu diffusés en temps réel est suivie d'une transmission des segments du contenu en différé.

Les modes décrits ci-dessus peuvent être mis en œuvre isolément ou en combinaison.

Les modes de réalisation décrits ci-dessus peuvent faire l'objet de variantes.

Selon une variante, une transformation de la demande de lecture initiale en demande de lecture en différée entraîne une restitution d'une donnée informant que le contenu est lu en différé. En effet, la demande initiale visant une lecture du contenu en temps réel, il est nécessaire d'informer l'utilisateur que les segments transmis et restitués sont des segments ayant déjà été diffusés.

Selon une autre variante, suite à la restitution du contenu en différé, une commande de retour au direct est proposée pour permettre de revenir sur le contenu diffusé en temps réel. Cette commande est accessible depuis l'écran sur lequel est restitué le contenu. Le retour au flux diffusé en temps réel s'effectue donc très rapidement en sélectionnant la commande de lecture du direct directement sur l'écran.

Selon une autre variante, la transformation visée ci-dessus n'est exécutée que pour un type de contenu comme par exemple un contenu dont la captation s'effectue en direct ; c'est le cas pour des événements sportifs, un discours d'un président, etc. dans ce cas, il y a souvent un intérêt à voir le contenu en question depuis son début le plus vite possible et sans risquer qu'un retour en arrière spoile le contenu.

Précisons enfin ici aussi ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion de l'accès à un contenu (C2) en cours de diffusion sous forme de segments de contenu transmis successivement, **caractérisé en ce qu'**une demande d'accès (REQ(C2);REQ(C2,MNFI)) aux segments de contenu diffusés en temps réel est suivie d'une obtention de segments du contenu en différé.

2. Procédé de gestion selon la revendication 1, **caractérisé en ce que** le contenu en cours de diffusion a un instant de début, la lecture en différée s'effectue depuis l'instant de début.

3. Procédé de gestion selon la revendication 1, **caractérisé en ce qu'**un contenu est associé à un type et **en ce que** le procédé est exécuté pour un type de contenu diffusé.

4. Procédé de gestion selon la revendication 3, **caractérisé en ce que** le type de contenu est un contenu dont les segments sont issus d'une captation en direct.

5. Procédé de gestion selon la revendication 4, **caractérisé en ce qu'**il comprend une restitution d'une donnée informant que le contenu est lu en différé.

6. Entité de gestion (ENT1) de l'accès à un contenu (C2) en cours de diffusion sous forme de segments de contenu transmis successivement, **caractérisé en ce qu'**elle comprend un module de traitement apte à , suite à une demande d'accès (REQ(C2);REQ(C2,MNFI)) aux segments de contenu diffusés en temps réel, obtenir des segments du contenu en différé.

7. dispositif de lecture (STB) comprenant une entité de gestion (ENT1) telle que définie dans la revendication 6.

8. Programme d'ordinateur apte à être mis en œuvre sur une entité de gestion (ENT1) telle que définie dans la revendication 6, le programme comprenant des instructions de code qui, lorsqu'il est exécuté par un processeur, réalise les étapes du procédé définies dans la revendication 1.

9. Support de données sur lequel a été mémorisée au moins une série d'instructions de code de programme pour l'exécution d'un procédé selon la revendication 1.

10. Procédé de gestion de la transmission d'un contenu (C2) au cours de sa diffusion sous forme de segments transmis successivement, **caractérisé en ce qu'**une réception d'une demande d'accès (REQ(C2);REQ(C2,MNFI)) aux segments de contenu diffusés en temps réel est suivie d'une transmission des segments du contenu en différé.

11. Procédé de gestion selon la revendication 11, **caractérisé en ce qu'**un contenu est associé à un type et **en ce que** le procédé est exécuté pour un type de contenu diffusé.

12. Procédé de gestion selon la revendication 12, **caractérisé en ce que** le type de contenu est un contenu dont les segments sont issus d'une captation en direct.

13. Procédé de gestion selon la revendication 11, **caractérisé en ce qu'**il comprend une transmission d'une demande de restitution d'une donnée informant que le contenu est lu en différé.

14. Entité de gestion (ENT2) de l'accès à un contenu (C2) en cours de diffusion sous forme de segments de contenu transmis successivement, **caractérisé en ce qu'**elle comprend un module de traitement apte à , suite à la réception d'une demande d'accès (REQ(C2);REQ(C2,MNFI)) aux segments de contenu diffusés en temps réel, transmettre des segments du contenu en différé

15. Serveur (SRV) comprenant une entité de gestion (ENT2) telle que définie dans la revendication 14 .

16. Programme d'ordinateur apte à être mis en œuvre sur une entité de gestion (ENT) telle que définie dans la revendication 14, le programme comprenant des instructions de code qui, lorsqu'il est exécuté par un processeur, réalise les étapes du procédé définies dans la revendication 10.

17. Support de données sur lequel a été mémorisée au moins une série d'instructions de code de programme pour l'exécution d'un procédé selon la revendication 10.
